# DEMANDE DE BREVET EUROPEEN

(11) **EP 0 782 247 A1**
(43) Date de publication de la demande: **02.07.1997**
(21) Numéro de dépôt: 96402885.6
(22) Date de dépôt: 24.12.1996
(51) Int. Cl.: H02P 6/22

(54) **Procédé et dispositif pour la commande d'un moteur synchrone, notamment de véhicule automobile**

(30) Priorité: 29.12.1995 FR 9515727
(71) Demandeur: VALEO ELECTRONIQUE, 94042 Creteil Cédex (FR)
(72) Inventeur: Permuy,Alfred, 92500 Rueil-Malmaison (FR)
(74) Mandataire: Martin, Jean-Jacques

(57) **Abrégé**

Procédé de commande des interrupteurs commandant l'alimentation d'un moteur électrique de type synchrone, notamment de véhicule automobile, dans lequel, pour stabiliser le rotor du moteur au démarrage, on commande lesdits interrupteurs de façon à ce qu'ils soient fermés pendant une phase où la force contre-électromotrice développée dans l'enroulement qu'ils commandent est positive, caractérisé en ce qu'on commande l'ouverture d'un interrupteur en fonction du passage à zéro par les valeurs négatives de la tension tension induite par la force contre-électromotrice dans un enroulement différent de celui qu'il commande.

## Description

La présente invention est relative à un procédé et à un dispositif pour la commande de l'alimentation d'un moteur électrique synchrone, notamment de véhicule automobile.

Elle trouve en particulier avantageusement application pour la commande d'un moteur électrique de ventilateur de refroidissement d'un moteur à combustion de véhicule automobile ou encore d'un moteur électrique d'un système de chauffage, ventilation ou climatisation d'habitacle de véhicule.

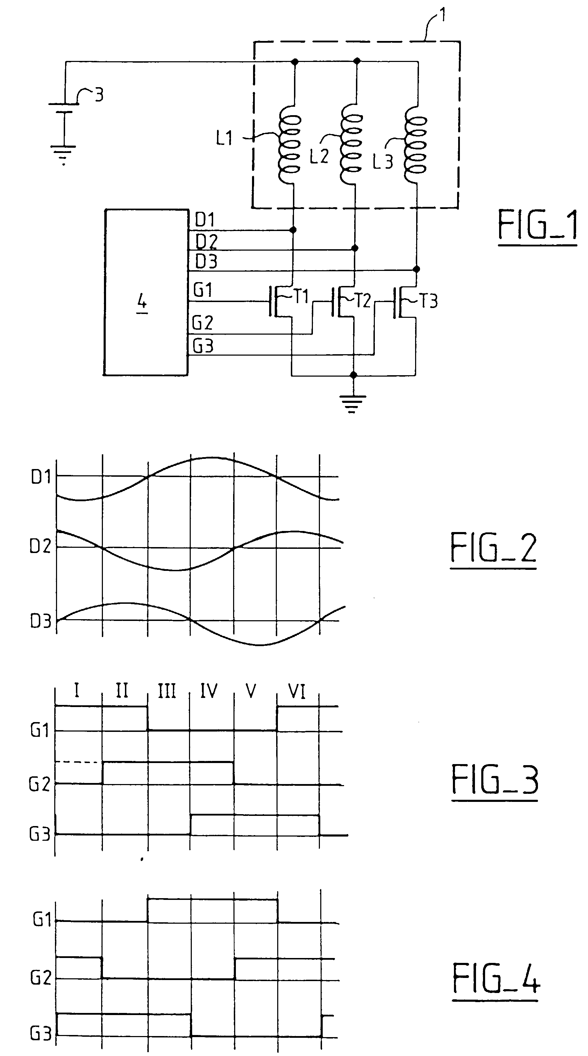

On a illustré sur la figure 1 un dispositif d'alimentation d'un moteur synchrone triphasé 1.

Les trois enroulements du stator de ce moteur 1 ont été référencés L₁, L₂ et L₃.

Ces trois enroulements L₁, L₂ et L₃ sont reliés d'un côté à une source de tension continue 3, qui est par exemple la batterie du véhicule, et de l'autre à la masse par l'intermédiaire d'interrupteurs référencés respectivement T₁, T₂ et T₃, qui sont généralement des transistors de type MOSFET reliés auxdits enroulements par leur drain.

En fonctionnement normal, les tensions des drains D₁, D₂ et D₃ de ces trois interrupteurs T₁ à T₃ sont des tensions périodiques, généralement sinusoïdales, déphasées de 120° les unes par rapport aux autres.

On a illustré sur la figure 2 l'allure idéale de ces tensions.

Ces tensions de drain sont représentatives des forces contre-électromotrices développées dans les différents enroulements L₁ à L₃ par rapport auxquelles elles sont décalées d'une tension U_{bat} correspondant à la tension de la source (batterie du véhicule) à laquelle ces enroulements L₁ à L₃ sont reliés. Elles sont lues par une unité de gestion 4 qui commande en tension les grilles G₁ à G₃ des transistors T₁ à T₃, de façon à ce que lesdits transistors T₁ à T₃ soient successivement conducteurs lorsque leur tension de drains est inférieure à U_{bat}.

Une telle séquence de commande a été illustrée sur la figure 3.

Pour démarrer un moteur synchrone, il est nécessaire de stabiliser son rotor par rapport à son stator. Il arrive en effet qu'avant le démarrage, le rotor présente, par exemple du fait des mouvements d'air à travers l'hélice entraînée par le moteur, une rotation initiale dans un sens contraire au sens de fonctionnement. En l'absence de stabilisation, cette rotation initiale empêche le démarrage du moteur, dont le rotor peut même être entraîné en rotation dans un sens contraire à celui désiré.

Il est bien connu que l'on peut stabiliser le rotor d'un moteur synchrone en alimentant les enroulements de son stator selon une séquence déterminée par rapport aux forces contre-électromotrices de façon à être inversée par rapport à la séquence de commande de ces enroulements en régime de fonctionnement moteur.

Le rotor est alors freiné au lieu d'être entraîné.

On a illustré sur la figure 4 une séquence de commande de la tension des grilles G₁ à G₃ en ce sens. Avec une telle séquence, les interrupteurs T₁ à T₃ sont successivement passants, lorsque la force contre électro-motrice développée dans l'enroulement qu'ils commandent est positive.

Généralement, chaque interrupteur T₁ à T₃ est directement commandé en fonction de la valeur de la tension entre les extrémités de l'enroulement L₁ à L₃ qu'il commande.

Toutefois, pour réaliser un freinage du rotor avant le démarrage du moteur, une telle commande n'est pas satisfaisante.

La tension entre les extrémités d'un enroulement est en effet perturbée par la fermeture de l'interrupteur qui le commande, puisque la circulation d'un courant génère une tension résistive qui se soustrait à la force contre-électromotrice générée dans cet enroulement.

Par conséquent, pendant la phase de conduction, cette tension aux bornes de l'enroulement - tension dont une image est la tension de drain dans le cas où l'interrupteur est un transistor de type MOSFET - ne permet pas d'avoir accès à la force contre-électromotrice induite.

Un but de l'invention est de pallier cet inconvénient.

L'invention propose à cet effet un procédé de commande des interrupteurs commandant l'alimentation d'un moteur électrique de type synchrone, notamment de véhicule automobile, dans lequel, pour stabiliser le rotor du moteur au démarrage, on commande lesdits interrupteurs de façon à ce qu'ils soient fermés pendant une phase où la force contre-électromotrice développée dans l'enroulement qu'ils commandent est positive, caractérisé en ce qu'on commande l'ouverture d'un interrupteur en fonction du passage à zéro par les valeurs négatives de la tension induite par la force contre-électromotrice dans un enroulement différent de celui qu'il commande.

D'autres caractéristiques et avantages de l'invention ressortiront encore de la description qui suit. Cette description est purement illustrative et non limitative. Elle doit être lue en regard des dessins annexés sur lesquels :
- les figures 1 à 4, qui ont déjà été discutées, illustrent un fonctionnement de moteur électrique conformément à un art antérieur connu ;
- les figures 5 et 6 sont des figures semblables aux figures 2 et 4 illustrant une séquence de commande conforme à un mode de mise en oeuvre possible pour l'invention ;
- les figures 7 et 8 sont des figures semblables aux figures 5 et 6 illustrant un autre mode de mise en oeuvre possible de l'invention.

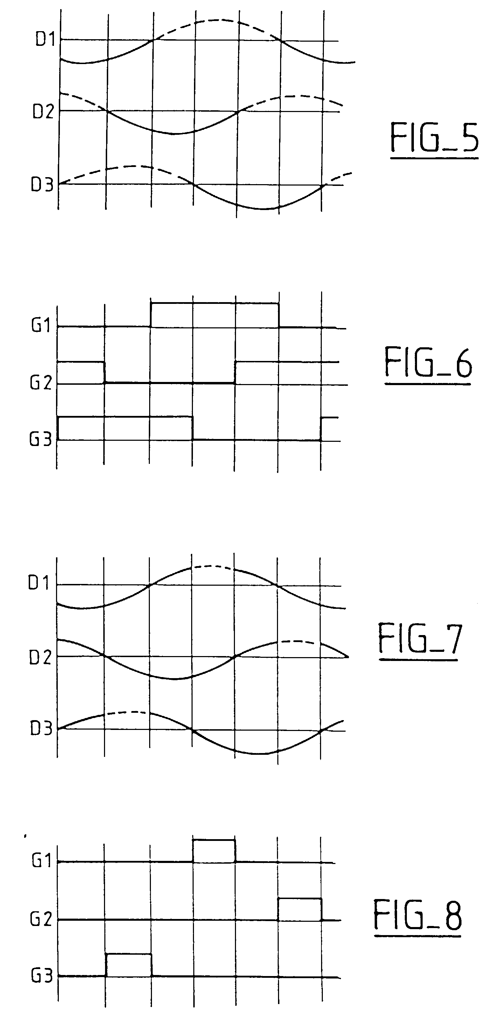

Les séquences de commande représentées sur ces figures 5 à 8 illustrent l'application de l'invention à la commande d'une alimentation de moteur synchrone triphasé telle qu'illustrée sur la figure 1.

Ces séquences de commande sont mises en oeuvre par l'unité 4, qui actionne les interrupteurs T₁ à T₃ en commandant leurs grilles G₁ à G₃, en fonction des tensions des drains D₁ à D₃.

L'invention s'applique bien entendu à d'autres types de dispositifs.

Elle s'applique en particulier de façon générale à l'alimentation de tout moteur polyphasé.

Egalement, l'invention n'est pas limitée à une commande par des interrupteurs de type transistors MOSFET.

Selon le mode de mise en oeuvre illustré sur les figures 5 et 6, la fermeture de chaque interrupteurs T₁ à T₃ est commandée par la fin de la phase pendant laquelle la force contre électro-motrice développée par l'enroulement L₁ à L₃ qu'il commande est négative, au passage à U_{bat} de la tension de son drain D₁ à D₃.

Son ouverture est commandée, avec un déphasage approprié, par le passage à U_{bat} par les valeurs inférieures de la tension du drain d'un autre interrupteur.

En particulier, dans le cas illustré sur les figures 5 et 6 d'un moteur triphasé, l'ouverture d'un interrupteur est commandée avec un retard de 60° par le passage à zéro par les valeurs négatives de la tension induite par la force contre-électromotrice qui est en retard de 120° par rapport à la force contre électro-motrice développée dans l'enroulement commandé par ledit interrupteur.

Ainsi, la fermeture de l'interrupteur T₁ est commandée par le passage à U_{bat} par les valeurs inférieures de la tension sur son drain D₁. Son ouverture est commandée, avec un retard de 60°, par le passage à U_{bat} par les valeurs inférieures de la tension sur le drain D₂.

Classiquement, le retard de 60° qui est appliqué entre le passage à U_{bat} par valeurs inférieures de la tension sur D₁ et l'ouverture de T₁, est déterminé par comptage des impulsions d'une horloge pilotant l'unité de gestion 4, le nombre d'impulsions correspondant au retard de 60° étant fonction de la fréquence de commande du moteur.

En pratique, les tensions des drains des transistors sont comparées à la tension U_{bat} de la batterie à l'aide d'un circuit comparateur compris dans l'unité de gestion 4.

Par conséquent, avec une telle séquence de commande, on utilise uniquement pour commander les interrupteurs les portions des cycles de tensions de drain qui sont représentatives des forces contre-électromotrices développées dans les enroulements (portions en traits continus sur la figure 5).

On se réfère maintenant au mode de mise en oeuvre illustré sur les figures 7 et 8.

Selon ce mode de mise en oeuvre, la fermeture et l'ouverture d'un interrupteur sont commandées à l'intérieur de la phase où la force contre-électromotrice développée sur l'enroulement qu'il commande est positive, par le passage à zéro de tensions induites par les forces contre-électromotrices des autres enroulements.

Ainsi, dans le cas tel qu'illustré sur ces figures 7 et 8 de la commande d'un moteur triphasé, un interrupteur est fermé par le passage à zéro par les valeurs positives d'une tension induite par une force contre-électromotrice qui est en avance de 120° par rapport à celle développée dans l'enroulement commandé par ledit interrupteur ; il est ouvert par le passage à zéro par les valeurs négatives d'une tension induite par une force contre-électromotrice qui est en retard de 120° par rapport à celle développée dans ledit enroulement.

Par exemple, l'interrupteur T₁ est fermé lorsque la tension du drain D₃ passe à U_{bat} par les valeurs supérieures ; il est ouvert lorsque la tension du drain D₂ passe à U_{bat} par les valeurs inférieures.

L'interrupteur T₂ est fermé lorsque la tension du drain D1 passe à Ubat par les valeurs supérieures ; il est ouvert lorsque la tension du drain D₃ passe à U_{bat} par les valeurs inférieures.

L'interrupteur T₃ est fermé lorsque la tension du drain D₂ passe à U_{bat} par les valeurs supérieures ; il est ouvert lorsque la tension du drain D₃ passe à U_{bat} par les valeurs inférieures.

Ainsi, chaque interrupteur T₁ à T₃ est passant pendant une phase de 60° du cycle des forces contre-électromotrices. Cette phase passante d'un interrupteur T₁ à T₃ correspond à une portion du cycle pendant laquelle la force contre-électromotrice développée dans l'enroulement qu'il commande, prend une valeur positive maximale.

Une telle commande permet par conséquent de n'utiliser pour déclencher la fermeture et l'ouverture des interrupteurs que des tensions représentatives des forces contre-électromotrices développées dans les enroulements (portions représentées en traits continus sur la figure 7).

De plus, étant donné que les interrupteurs sont passants lorsque les forces contre-électromotrices développées dans les enroulements qui leur correspondent sont maximales, le rendement d'une telle commande est optimum.

En outre, une telle commande ne nécessite pas l'introduction d'un retard entre la survenance d'un évènement et le déclenchement correspondant de l'ouverture ou de la fermeture d'un interrupteur ce qui simplifie sensiblement la mise en oeuvre de la commande, surtout lorsque le moteur est commandé à plusieurs fréquences possibles, ou à une fréquence continuement variable.

## Revendications

1. Procédé de commande des interrupteurs commandant l'alimentation d'un moteur électrique de type synchrone, notamment de véhicule automobile, dans lequel, pour stabiliser le rotor du moteur au démarrage, on commande lesdits interrupteurs (T₁ à T₃) de façon à ce qu'ils soient fermés pendant une phase où la force contre-électromotrice développée dans l'enroulement qu'ils commandent est positive, caractérisé en ce qu'on commande l'ouverture d'un interrupteur (T₁ à T₃) en fonction du passage à zéro par les valeurs négatives de la tension induite par la force contre-électromotrice dans un enroulement (L₁ à L₃) différent de celui qu'il commande.

2. Procédé selon la revendication 1, caractérisé en ce que la fermeture d'un interrupteur (T₁ à T₃) est commandée par le passage à zéro par les valeurs négatives de la tension induite par la force contre-électromotrice de l'enroulement (L₁ à L₃) qu'il commande.

3. Procédé selon la revendication 2, caractérisé en ce que, dans le cas d'un moteur triphasé (1), l'ouverture d'un interrupteur (T₁ à T₃) est commandée avec un retard de 60° par le passage à zéro par les valeurs négatives de la tension induite par une force contre-électromotrice qui est en retard de 120° par rapport à la force contre-électromotrice développée dans l'enroulement (L₁ à L₃) que ledit interrupteur (T₁ à T₃) commande.

4. Procédé selon la revendication 1, caractérisé en ce que la fermeture et l'ouverture d'un interrupteur (T₁ à T₃) sont commandées à l'intérieur de la phase où la force contre-électromotrice développée dans l'enroulement (L₁ à L₃) qu'il commande, est positive, par le passage à zéro de tensions induites par des forces contre-électromotrices dans les autres enroulements.

5. Procédé selon la revendication 4, caractérisé en ce que, dans le cas d'un moteur triphasé (1), un interrupteur (T₁ à T₃) est fermé par le passage à zéro par les valeurs positives d'une tension induite par une force contre-électromotrice qui est en avance de 120° par rapport à la force contre-électromotrice développée dans l'enroulement (L₁ à L₃) commandé par ledit interrupteur (T₁ à T₃) et est ouvert par le passage à zéro par les valeurs négatives d'une tension induite par une force contre-électromotrice qui est en retard de 120° par rapport à la force contre électromotrice développée dans l'enroulement (L₁ à L₃) commandé par ledit interrupteur.

6. Procédé selon l'une des revendications précédentes, caractérisé en ce que les interrupteurs (T₁ à T₃) sont des transistors de type MOSFET reliés par leur drain (D₁ à D₃) aux enroulements (L₁ à L₃) du moteur qui sont par ailleurs reliés à une source de tension continue (3), les tensions des drains (D₁ à D₃) desdits transistors (T₁ à T₃) étant des tensions représentatives des forces contre électro-motrices, et étant comparées à la tension (Vbat) de ladite source (3).

7. Dispositif de commande de l'alimentation d'un moteur électrique synchrone, comportant une unité de gestion (4) qui actionne des interrupteurs (T₁ à T₃) qui commandent les enroulements dudit moteur, caractérisé en ce que ladite unité de gestion (4) met en oeuvre le procédé selon l'une des revendications précédentes.

8. Applicaton du procédé selon l'une des revendications 1 à 7 à la commande d'un moteur synchrone de refroidissement d'un moteur à combustion de véhicule automobile.

9. Application du procédé selon l'une des revendications 1 à 7, pour la commande d'un moteur synchrone de chauffage, ventilation ou climatisation d'habitacle de véhicule.
